# EUROPEAN PATENT SPECIFICATION

(11) **EP 4 275 823 B1**
(45) Date of publication and mention of the grant of the patent: **25.06.2025**
(21) Application number: 22872867.1
(22) Date of filing: 20.09.2022
(51) Int. Cl.: B23K 3/06, B23K 1/00, B23K 1/08

(54) **SOLDER PROCESSING DEVICE**
VORRICHTUNG ZUR LOTVERARBEITUNG
DISPOSITIF DE TRAITEMENT DE BRASURE

(30) Priority: 27.09.2021 JP 2021157013
(43) Date of publication of application: 15.11.2023
(73) Proprietor: Senju Metal Industry Co., Ltd., Tokyo 120-8555 (JP)
(72) Inventor: KAWASHIMA, Yasuji, Ibaraki-shi, Osaka 567-0006 (JP); ICHIKAWA, Hirokazu, Tokyo 120-8555 (JP); TOMITSUKA, Kenichi, Tokyo 120-8555 (JP)
(74) Representative: Hoffmann Eitle
(86) International application number: PCT/JP2022/034897
(87) International publication number: WO 2023/048113

(56) References cited:
- WO-A1-00/02695
- JP-U- H0 732 978
- JP-U- S61 111 663
- US-A1- 2009 261 147

## Description

### Technical Field

The present invention relates to a solder processing apparatus that supplies molten solder to a substrate, see the preamble of claim 1.

### Background Art

Conventionally, a jet soldering apparatus for supplying molten solder to a substrate has been known. Furthermore, it is also known that dross generated by oxidation of molten solder is formed in a jet soldering apparatus, and in Patent Literatures 1 and 2, apparatuses for coping with such dross are proposed.

Patent Literature 1 proposes an oxide separation apparatus in which a large number of blades are placed on a shaft so that a flat surface of the blades is orthogonal to a liquid surface of molten solder, the shaft is attached to a position where a part of the blades is immersed in the molten solder, and the shaft rotates in conjunction with a motor.

Patent Literature 2 proposes a jet solder tank in which a gutter that causes molten solder jetted from a jet nozzle to flow in one direction is installed on a side surface of the jet nozzle, a cover having an opening in a nozzle direction is installed at an end of a jet solder tank in an outflow direction of the molten solder, and a screw interlocked with a motor is installed in the cover.

### Citation List

### Patent Literature

Patent Literature 1: JP 2003-53529 A
Patent Literature 2: JP 2002-80950 A

Further related art may be found in Japanese Utility Model Application No. 1993 (H07)/32978U (describing the preamble of claim 1), in Japanese Utility Model Application No. 200691/1984, in WO 00/02695 A1 and in US 2009/0261147 A1.

### SUMMARY OF INVENTION

### PROBLEM TO BE SOLVED BY INVENTION

Even in the case of adopting Patent Literatures 1 and 2, the decomposition of dross can be realized to a certain extent, but the effect is limited.

The present invention provides a solder processing apparatus capable of significantly effectively decomposing dross.

### MEANS FOR SOLVING PROBLEM

The present invention is defined by the appended independent claim 1.

The dependent claims describe optional features and distinct embodiments.

### EFFECT OF INVENTION

The present invention provides a solder processing apparatus capable of significantly effectively decomposing dross.

### BRIEF DESCRIPTION OF FIGURES

Fig. 1 is a schematic diagram illustrating a soldering apparatus according to a present embodiment.
Fig. 2 is a side cross-sectional view of a jet solder apparatus illustrating an aspect in which a first extension part and a second extension part are provided in the present embodiment.
Fig. 3 is an upper plan view of the jet solder apparatus adopting an aspect in which the first extension part is integrated with a first coupling body and the second extension part is integrated with a second coupling body in the present embodiment.
Fig. 4 is an upper plan view of the jet solder apparatus adopting an aspect in which the first extension part is fastened to a moving main body by a fastening member and the second extension part is fastened to the moving main body by the fastening member in the present embodiment.
Fig. 5A is a side view illustrating an aspect in which a first extension member is integrated with the first coupling body and a second extension member is integrated with the second coupling body in the present embodiment.
Fig. 5B is an upper plan view illustrating an aspect in which the first extension member is integrated with the first coupling body and the second extension member is integrated with the second coupling body in the present embodiment.
Fig. 6A is a side view illustrating an aspect in which the first extension member and the second extension member are fastened to the moving main body by the fastening member in the present embodiment.
Fig. 6B is an upper plan view illustrating an aspect in which the first extension member is fastened to the moving main body by the fastening member and the second extension member is fastened to the moving main body by the fastening member in the present embodiment.
Fig. 7 is a side view of an example of a moving unit used in the present embodiment as viewed from a side opposite to a supply unit.

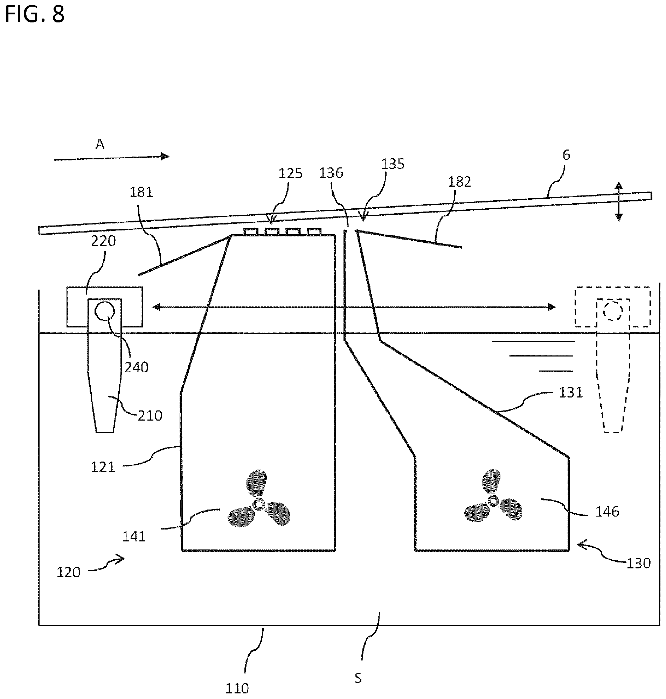

Fig. 8 is a side cross-sectional view of the jet solder apparatus in which only one extension part is provided in a substrate conveyance direction (in a left-right direction in Fig. 8), aspect not covered by the present invention.
Fig. 9 is a side cross-sectional view of the jet solder apparatus illustrating an aspect in which a third extension part is provided in addition to the first extension part and the second extension part in the present embodiment.
Fig. 10 is an upper plan view illustrating an aspect in which each of the first extension member, the second extension member, and the third extension member is fastened to the moving main body by the fastening member in the present embodiment.
Fig. 11 is an upper plan view illustrating an aspect in which the first extension member is fastened to the moving main body by the fastening member in the present embodiment.
Fig. 12 is a side cross-sectional view illustrating an aspect in which a first housing and a second housing are integrally provided in the present embodiment.
Fig. 13 is an upper plan view illustrating an aspect in which two slit-shaped second openings are provided in an aspect extending in parallel in the present embodiment.
Fig. 14 is a side cross-sectional view of a separation apparatus illustrating an aspect in which an extension part is provided in the separation apparatus separate from the jet soldering apparatus in the present embodiment.
Fig. 15 is an upper plan view illustrating an aspect in which the extension part reciprocates in a direction orthogonal to the substrate conveyance direction in the present embodiment, and an aspect in which the extension part is provided on a downstream side in the substrate conveyance direction with respect to the supply unit.
Fig. 16 is an upper plan view illustrating an aspect in which the extension part reciprocates in a direction orthogonal to the substrate conveyance direction in the present embodiment, and an aspect in which the extension part is provided on an upstream side in the substrate conveyance direction with respect to the supply unit.
Fig. 17A is a photograph of a dross lump generated as a result of not adopting the extension part in a case where Sn-58Bi is used as the molten solder.
Fig. 17B is a photograph of decomposed dross generated as a result of the aspect as illustrated in Fig. 4 when Sn-58Bi is used as the molten solder.

### EMBODIMENT OF THE INVENTION

### Embodiment

### <<Configuration>>

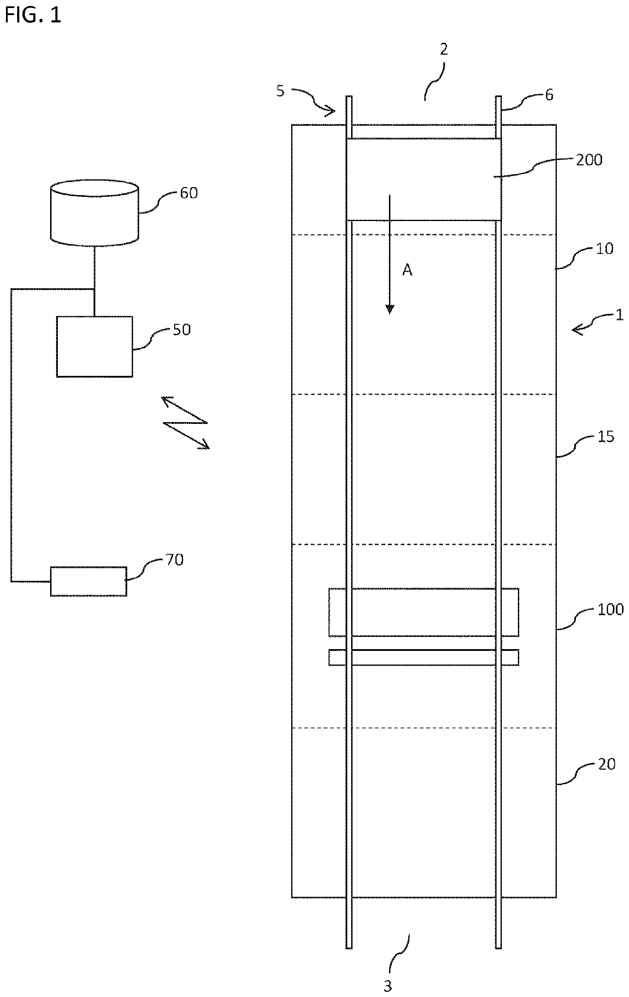

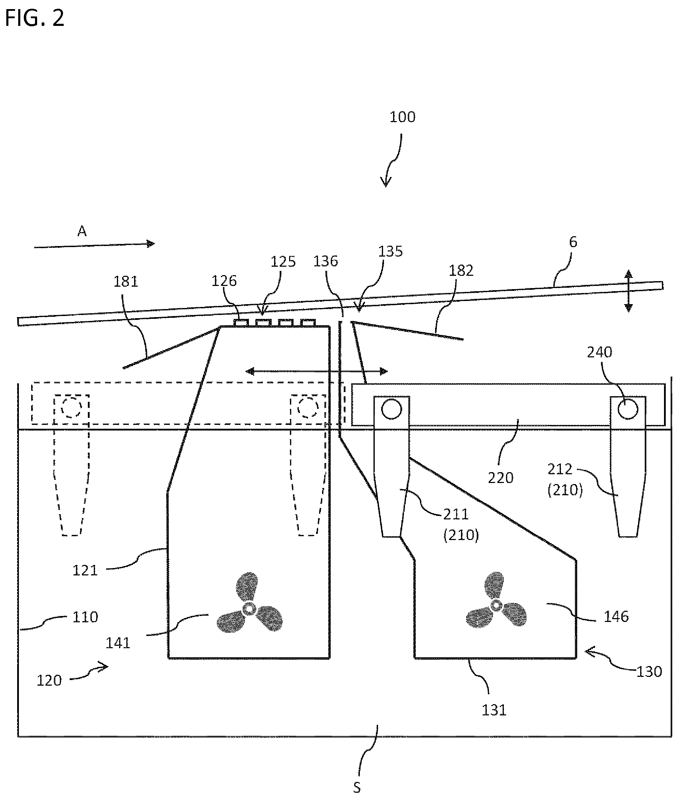

A soldering apparatus illustrated in Fig. 1 is a apparatus that performs soldering processing on a substrate 200 on which electronic components such as semiconductor elements, resistors, and capacitors are mounted on a circuit. Typically, the electronic components and the like are positioned on a lower side of the substrate 200. The soldering apparatus has a main body 1 and a conveyance unit 5 that conveys the substrate 200. The main body 1 has a carry-in port 2 through which the substrate 200 is carried in and a carry-out port 3 through which the substrate 200 is carried out. The substrate 200 may be conveyed at a predetermined angle, for example, an inclination of about 3 to 6 degrees when viewed from the side (see Fig. 2). In this case, a downstream side is positioned at a higher position than an upstream side in a substrate conveyance direction A. However, the present invention is not limited thereto, and the substrate 200 may be horizontally conveyed, for example. The conveyance unit 5 may have a conveyance driver (not illustrated) that applies a driving force to convey the substrate 200, and a conveyance rail 6 that guides the substrate 200.

As illustrated in Fig. 1, the main body 1 may be provided with a fluxer 10 for applying flux to the substrate 200, a preheater unit 15 for preheating the substrate 200 coated with flux, a jet soldering apparatus 100 for jetting molten solder into contact with the substrate 200, and a cooler 20 for cooling the soldered substrate 200. The substrate 200 conveyed along the conveyance rail 6 of the conveyance unit 5 sequentially passes through the fluxer 10, the preheater unit 15, the jet soldering apparatus 100, and the cooler 20. The jet soldering apparatus 100 may have a control unit 50 that gives a command to each component to control, a storage unit 60 that stores various pieces of information, and an operation unit 70 for operating the soldering apparatus by inputting various information by operator. Note that in Fig. 1, the soldering apparatus is illustrated in an upper plan view except for the control unit 50, the storage unit 60, and an operation unit 70.

The fluxer 10 is used to apply flux to the conveyed substrate 200. The flux may include a solvent, an activator, and the like. The fluxer 10 may be provided with a plurality of coating apparatuses. The type of flux may be selectively used according to the type of solder and the type of the substrate 200.

The preheater unit 15 heats the substrate 200 to uniformly raise the substrate 200 to a predetermined temperature. When the substrate 200 is heated in this manner, the solder is easily attached to a predetermined part of the substrate 200. For example, a far-infrared panel heater is used as the preheater unit 15. The far-infrared panel heater can rapidly heat the substrate 200 to a set temperature. Furthermore. The substrate 200 may be heated by blowing gas (hot air) heated by the heater onto the substrate 200 by a fan. Furthermore, as the preheater unit 15, a halogen heater or the like may be used.

The cooler 20 has a cooling fan (not illustrated), and cools the substrate 200 soldered by the jet soldering apparatus 100. The control of the cooling fan may be only ON and OFF, but the wind speed may be adjusted. Furthermore, as the cooler 20, a chiller or the like may be used to cool the substrate 200 to a predetermined temperature.

The control unit 50 illustrated in Fig. 1 is communicably connected to the conveyance unit 5 including the conveyance rail 6, the fluxer 10, the preheater unit 15, the jet soldering apparatus 100, the cooler 20, the operation unit 70, and the storage unit 60. The communicable connections include both wired and wireless connections. The operation unit 70 may have a liquid crystal display panel, a numeric keypad, or the like, and is typically a personal computer, a smartphone, a tablet, or the like. When an operator operates the operation unit 70, the control unit 50 may control a conveyance speed by the conveyance unit 5, a timing of conveying the substrate 200, a temperature of the flux at the fluxer 10, an application amount of the flux, a temperature of the preheater unit 15, a temperature of molten solder S of the jet soldering apparatus 100, a jet amount, a jet speed, ON and OFF of the cooling fan of the cooler 20, and the like. The storage unit 60 may store information input by the operation unit 70, an instruction of the control unit 50, an operating time of the jet soldering apparatus 100, and the like.

Next, the jet soldering apparatus 100 of the present embodiment will be described. Typically, the jet soldering apparatus 100 corresponds to a solder processing apparatus.

As illustrated in Fig. 2, the jet soldering apparatus 100 has a storage tank 110 that stores the molten solder S, a first pump 141 that is a first drive unit, a first supply port 125 that receives a driving force from the first pump 141 and jets the molten solder S, a second pump 146 that is a second drive unit, and a second supply port 135 that receives a driving force from the second pump 146 and jets the molten solder S. The molten solder S jetted from the first supply port 125 and the second supply port 135 is jetted upward from below. The molten solder S having received the driving force from the first pump 141 is pressure-fed in a duct and jetted toward the substrate 200 to attach the solder to a predetermined part of the substrate 200. Similarly, the molten solder S having received the driving force from the second pump 146 is pressure-fed in a duct and jetted toward the substrate 200 to attach the solder to a predetermined part of the substrate 200. The molten solder S is heated to a temperature of, for example, about 180°C to 250°C by a heater (not illustrated). The molten solder supplied from the first supply port 125 and the second supply port 135 may be circulated and used. In this case, it may be circulated through a filter (not illustrated). Each of the first pump 141 and the second pump 146 is typically constituted of one pump, but each of the first pump 141 and the second pump 146 may be constituted of a plurality of pumps.

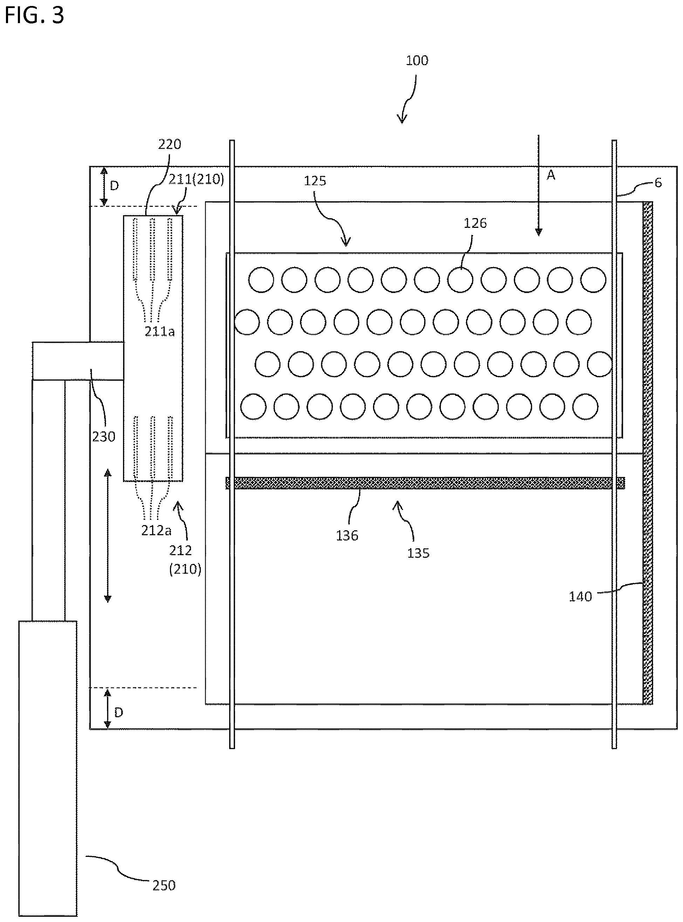

The first supply port 125 of the jet soldering apparatus 100 illustrated in Fig. 2 has a plurality of first openings 126 (see Fig. 3), and the first openings 126 constitute a primary jet nozzle. The plurality of first openings 126 are used to vigorously supply a large amount of molten solder S to the substrate 200. A second opening 136 of the second supply port 135 is a secondary jet nozzle, and is used to supply the molten solder S to the substrate 200 with weaker force than the first supply port 125. The jet solder supplied from the first supply port 125 is a dynamic supply for vigorously colliding the molten solder S against the substrate 200, and is a supply for spreading the molten solder S to every corner of the substrate 200. On the other hand, the jet solder supplied from the second supply port 135 is a static supply, and is a supply for cleanly attaching the solder to an electrode or the like of the substrate 200 by passing the jet solder through the molten solder S having a gentle flow.

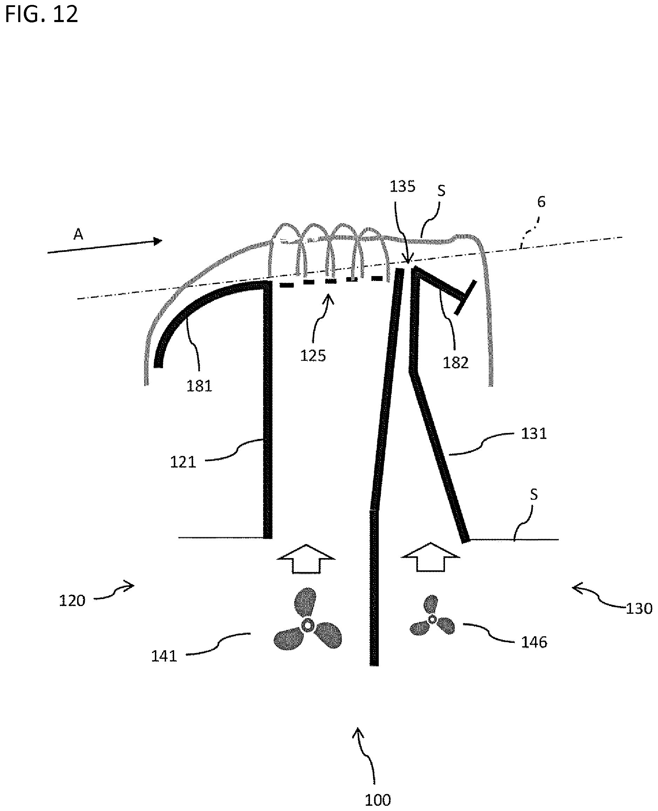

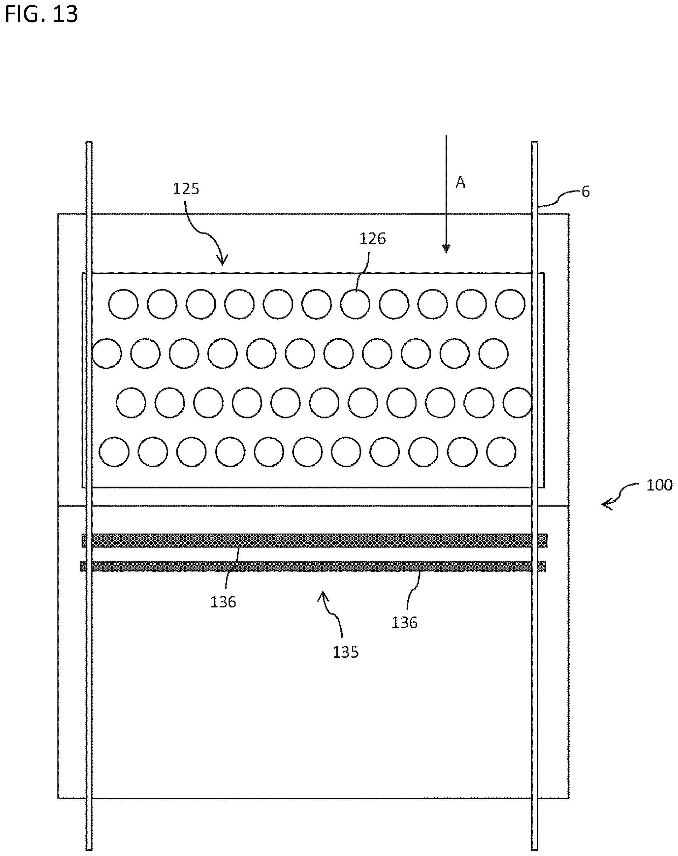

In the present embodiment, a supply unit has a first supply unit 120 and a second supply unit 130. As illustrated in Fig. 2, a first supply unit 120 has a first housing 121 and the first supply port 125 provided on an upper surface of the first housing 121 and having one or the plurality of first openings 126 for supplying the molten solder S. The first opening 126 may be provided so as to protrude upward from the upper surface of the first housing 121. A second supply unit 130 has a second housing 131 and the second supply port 135 provided on an upper surface of the second housing 131 and having one or a plurality of the second openings 136 for supplying the molten solder S. The first housing 121 and the second housing 131 may be provided apart from each other, but they may be provided integrally (see Fig. 12). In a case where the first housing 121 and the second housing 131 are integrated, a part of the wall surface may be shared. In the present embodiment, the first supply port 125 having the plurality of circular first openings 126 and the second supply port 135 having one slit-shaped second opening 136 will be described as an example (see Fig. 3). However, the present invention is not limited to such an aspect, and for example, a plurality of the slit-shaped second openings 136 may be provided. In this case, the plurality of slit-shaped second openings 136 may be provided in an aspect of extending in parallel (see Fig. 13).

A temperature of the molten solder S is generally about 50°C higher than a melting temperature of the solder. In recent years, there has been an increasing need to lower a working temperature in order to reduce damage to components and reduce mechanical power consumption. Furthermore, since the market price of Sn and Ag has increased, it has been studied that a solder that does not use Sn or Ag is used, and typically, it has been studied that Sn-58Bi (melting point of 139°C) is used instead of Sn-3Ag-0.5Cu (melting point of 217°C). Sn-58Bi is a low-temperature eutectic solder. Note that, when Sn-58Bi is used, soldering can be performed at a temperature of 200°C or lower. On the other hand, although Sn-58Bi is inexpensive, since Sn-58Bi has a property of being hard, brittle and easily oxidized, it is a material difficult to handle.

While the molten solder S is supplied, the molten solder S supplied from the first supply port 125 and the molten solder S supplied from the second supply port 135 are mixed. The molten solder mixed in this manner may not be separated from the substrate 200 conveyed by the conveyance unit 5 between the first supply port 125 and the second supply port 135 (see Fig. 12). The substrate 200 is supported and conveyed by the conveyance rail 6, but an upper surface of the mixed molten solder S may not be positioned below a lower end of the conveyance rail 6 that conveys the substrate 200 when viewed from a side in an entire length region along the substrate conveyance direction A between the first supply port 125 and the second supply port 135. In this case, the molten solder S is not separated from the substrate 200 conveyed by the conveyance unit 5 between the first supply port 125 and the second supply port 135.

In the present embodiment, an aspect in which the molten solder S supplied from the first supply port 125 and the molten solder S supplied from the second supply port 135 are integrated and jetted to a position higher than the conveyance position of the substrate 200 will be mainly described, but the present invention is not limited to such an aspect, and an aspect may be adopted in which a place where the molten solder S is not in contact with the substrate 200 is provided between the molten solder S supplied from the first supply port 125 and the molten solder S supplied from the second supply port 135, and the molten solder S is jetted clearly in two stages (see Patent Literature 2).

A total amount of the molten solder S per unit time supplied from the first openings 126 which are a primary jet nozzle may be about the same as a total amount of the molten solder S per unit time supplied from the second opening 136 which is a secondary jet nozzle, or may be 0.8 times or more and 1.2 times or less. The total amount of molten solder S per unit time supplied from the first openings 126 and the total amount of molten solder S per unit time supplied from the second opening 136 which is the secondary jet nozzle may be changed according to the type of the substrate 200. When identification information of the substrate 200 is input from the operation unit 70, a supply amount of the corresponding molten solder S may be read from the storage unit 60 by the control unit 50, and the molten solder S may be supplied from the first openings 126 and the second opening 136 by being adjusted to the read supply amount. The operation unit 70 may be capable of reading code information such as a bar code, and the control unit 50 may automatically adjust the supply amount of the molten solder S to the substrate 200 by reading the code information of the substrate 200.

When the molten solder S supplied from the first supply port 125 and the molten solder S supplied from the second supply port 135 are integrated, the molten solder S supplied from the first openings 126 which are the primary jet nozzle may be jetted to a position higher than a surface of the molten solder S supplied from the second opening 136 which is the secondary jet nozzle. A height of the molten solder S to be jetted is, for example, about 10 mm from a tip of each of the first openings 126. The molten solder S supplied from the second supply port 135 is pushed up by the molten solder S supplied from the first supply port 125. However, since the molten solder S is the same type of liquid, the molten solder S supplied from the first openings 126 and the molten solder S supplied from the second supply port 135 are mixed.

On a downstream side (left side in Fig. 2) of the second supply port 135 in the substrate conveyance direction A, a downstream adjusting part 182 extending in a horizontal direction or descending downward toward the downstream side may be provided. A height of the downstream adjusting part 182 may be appropriately changed. An upstream adjusting part 181 extending in the horizontal direction or rising upward toward the downstream side (right side in Fig. 2) may be provided on an upstream side of the first supply port 125 in the substrate conveyance direction A. The upstream adjusting part 181 and the downstream adjusting part 182 may be linearly inclined, or may be inclined so as to draw an arc in a longitudinal cross section (see the upstream adjusting part 181 in Fig. 12). A height adjustment of the upstream adjusting part 181 and the downstream adjusting part 182 may be manually performed, or may be automatically performed in response to a command from the control unit 50. The command from the control unit 50 may be issued on the basis of the identification information of the substrate 200. Adjusting the heights of the upstream adjusting part 181 and the downstream adjusting part 182 as described above is also advantageous in that the amount of the molten solder S supplied to the substrate 200 can be adjusted.

A height position of the conveyance rail 6 may also be adjustable (see Fig. 2). In a case where such an aspect is adopted, adjusting the height position of the conveyance rail 6 in addition to or instead of controlling the driving force of the first pump 141 and the second pump 146 is also advantageous in that it is possible to realize a configuration in which the substrate 200 continues to be in contact with the molten solder S between the first supply port 125 and the second supply port 135. The height position of the conveyance rail 6 may be manually performed, or may be automatically performed in response to a command from the control unit 50. The command from the control unit 50 may be issued on the basis of the identification information of the substrate 200.

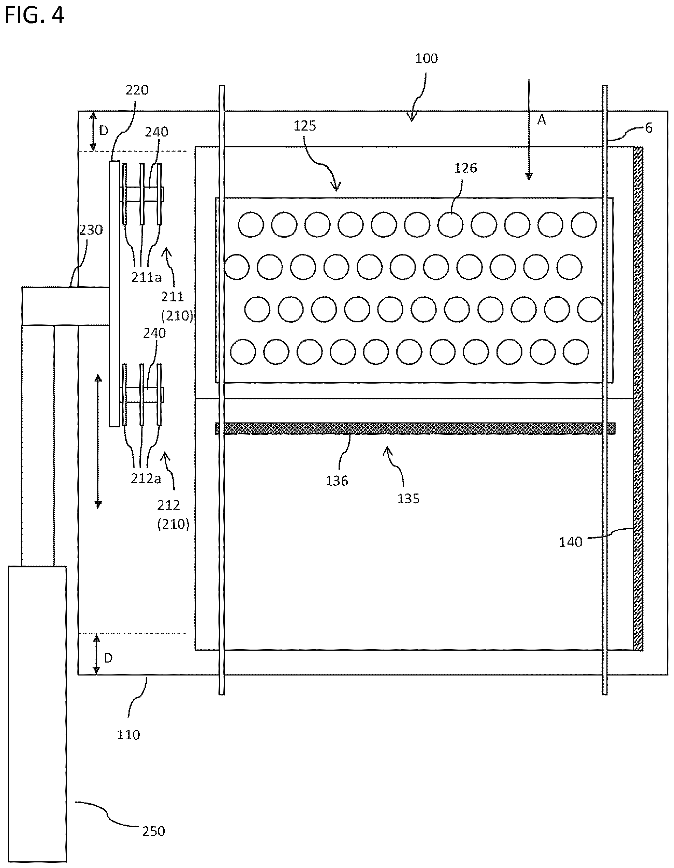

As illustrated in Fig. 2, an extension part 210 which is at least partially immersed in the molten solder S in the storage tank 110 and extends in the molten solder S, and a moving main body 220 to which the extension part 210 is attached may be provided. The extension part 210 reciprocates in the horizontal direction while extending along a moving direction in the molten solder S. "Extending along the moving direction" means that a longitudinal direction of the extension part 210 in the horizontal direction is along the moving direction. As an example, there can be exemplified an aspect in which the extension part 210 has a plate shape (for example, a flat plate shape), and the longitudinal direction of the plate-shaped extension part 210 in the horizontal direction is along the moving direction. Note that the aspect of "extending along the moving direction" in the present embodiment includes not only an aspect of extending completely parallel to the moving direction but also an aspect of extending obliquely with respect to the moving direction. Furthermore, a moving unit 250 that reciprocates the extension part 210 in the horizontal direction in the molten solder S by reciprocating the moving main body 220 in the horizontal direction may be provided. As illustrated in Figs. 3 and 4, the moving unit 250 and the moving main body 220 may be connected to each other via a coupling body 230. A unit (assembly) including the extension part 210, the moving main body 220, the coupling body 230, and the moving unit 250 may be provided. Such a unit may be retrofitted to an existing molten solder apparatus. The "reciprocating movement in the horizontal direction" in the present embodiment is sufficient to reciprocate including a horizontal component, and includes an aspect in which reciprocating movement is inclined with respect to the horizontal direction. The "reciprocating movement in the horizontal direction" in the present embodiment may be a full horizontal reciprocating movement, or may be an aspect of reciprocating movement at an angle of less than 45 degrees with respect to the horizontal direction. It is preferable that a member extending in a direction orthogonal to the moving direction and extending to a lower side of the extension part 210 in the molten solder S not be provided. That is, it is preferable that the extension part 210 extend to a lowermost side, and it is preferable that a member different from the extension part 210 (for example, a member extending in a direction orthogonal to the moving direction) not be provided. This is because, in a case where such a member (member extending in a direction orthogonal to the moving direction) is provided, an unnecessary wave is generated in the molten solder S every time the extension part 210 is moved, and extra energy is required to move the extension part 210.

The molten solder S may flow toward a side where the unit including the extension part 210, the moving main body 220, the coupling body 230, and the moving unit 250 is provided. In general, the molten solder S circulates in the storage tank 110, but the flow of the molten solder S by the circulation may be used to guide the dross to a side where the extension part 210 is provided (a left side in Figs. 3 and 4), or a weir 140 protruding upward may be provided on an opposite side to the side where the extension parts 210 of the first supply port 125 and the second supply port 135 are provided (see Figs. 3 and 4), and the molten solder S supplied from the first supply port 125 and the second supply port 135 may be guided to the side where the extension part 210 is provided (a left side in Figs. 3 and 4). An upstream adjusting part 181 and a downstream adjusting part 182 may be inclined downward toward the side where the extension part 210 is provided (the left side in Figs. 3 and 4), and the molten solder S supplied from the first supply port 125 and the second supply port 135 may be guided to the side where the extension part 210 is provided. It is preferable that a place where the molten solder S falls downward not be provided between the first supply port 125 and the second supply port 135 along the substrate conveyance direction. By adopting such an aspect, a surface area of the molten solder S in contact with air can be reduced, and therefore the molten solder S can be prevented from being oxidized.

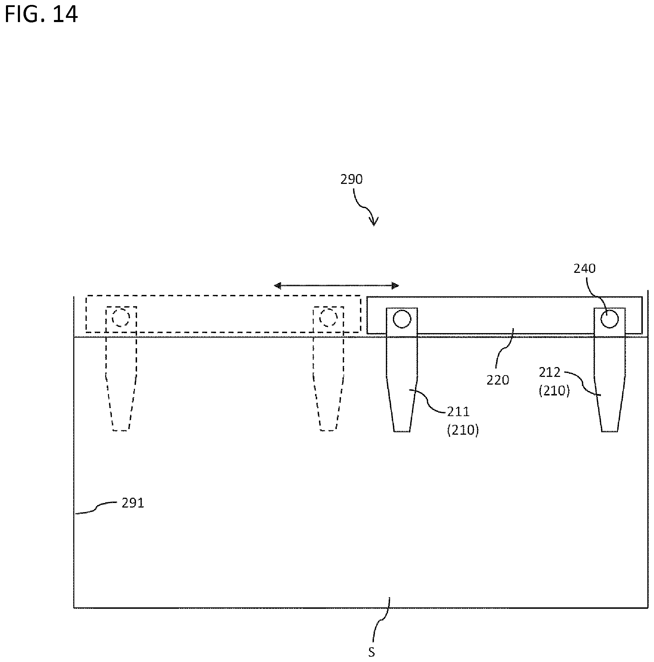

In the present embodiment, an aspect in which the extension part 210 is installed in the storage tank 110 of the jet soldering apparatus 100 will be mainly described, but the present invention is not limited to such an aspect, and the extension part 210 may be installed in a separation device 290 separate from the jet soldering apparatus 100 (see Fig. 14). In this case, the separation device 290 corresponds to the solder processing apparatus. In a case where the separation device 290 is employed, the molten solder S in which dross has occurred is transferred to the separation device 290, and the molten solder S in which dross has occurred is separated by the separation device 290. Note that in Fig. 14, the storage tank of the separation device 290 is denoted by reference sign 291.

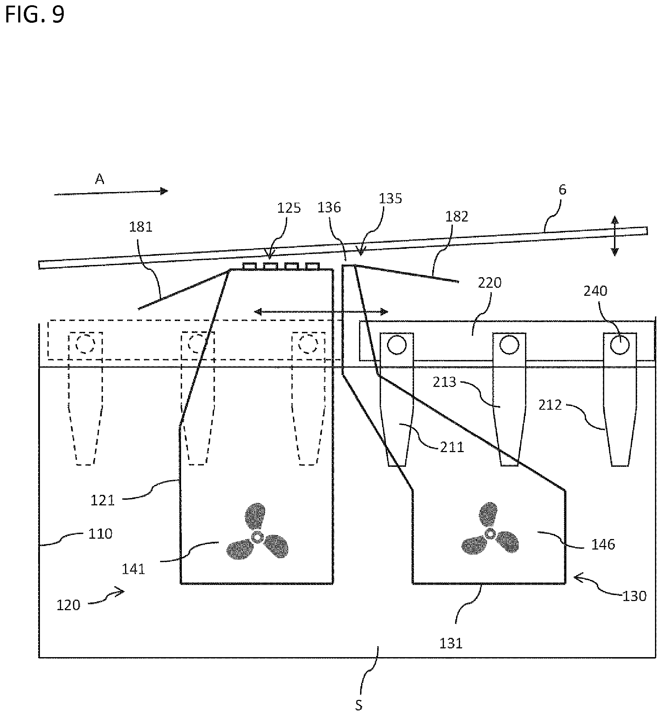

The extension part 210 may have a first extension part 211 provided on one side in the horizontal direction (for example, the upstream side in the conveyance direction A of the substrate 200: the left side in Fig. 2) and a second extension part 212 provided on the other side in the horizontal direction (for example, the downstream side in the conveyance direction A of the substrate 200: the right side in Fig. 2). The first extension part 211 may be provided at one end of the moving main body 220, and the second extension part 212 may be provided at the other end of the moving main body 220. Each of the first extension part 211 and the second extension part 212 may reciprocate in the horizontal direction while extending along the moving direction in the molten solder S. As an example, there can be exemplified an aspect in which each of the first extension part 211 and the second extension part 212 has a plate shape (for example, a flat plate shape), and the longitudinal direction of each of the plate-shaped first extension part 211 and second extension part 212 in the horizontal direction is along the moving direction. The one end of the moving main body 220 means a region in a range of 20% from the one end of the moving main body 220 and a region in a range of 0.2L from the one end when an entire length of the moving main body 220 is L. Similarly, the other end of the moving main body 220 means a region in a range of 20% from the other end of the moving main body 220, and means a range of 0.2L from the other end. The first extension part 211 and the second extension part 212 are provided as described above, the moving unit 250 reciprocates the first extension part 211 and the second extension part 212 in the horizontal direction in the molten solder S. The present invention is not limited to such an aspect, and a third extension part 213 provided between the first extension part 211 and the second extension part 212 may be provided (see Fig. 9).

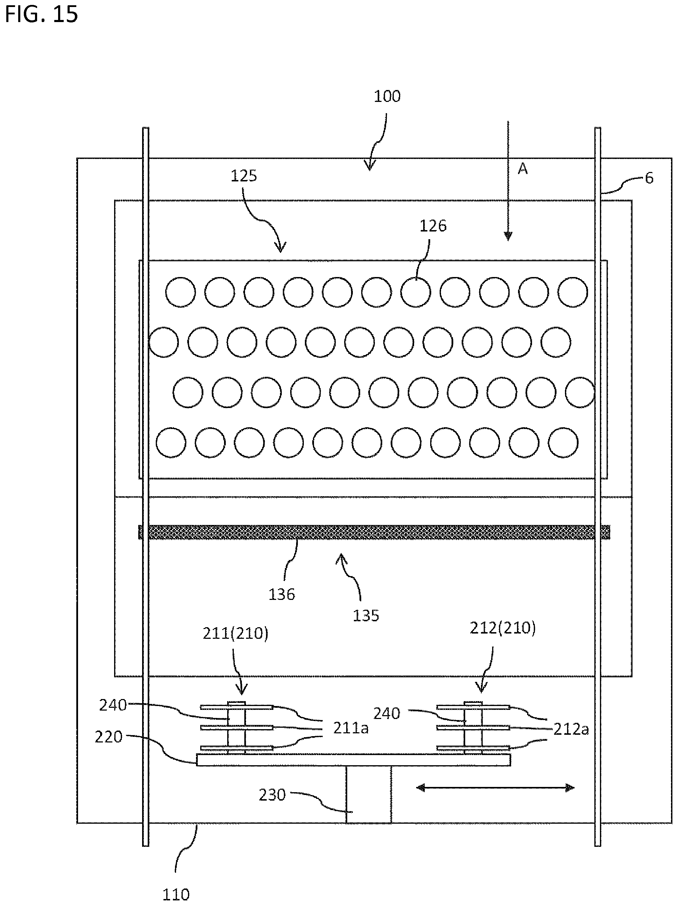

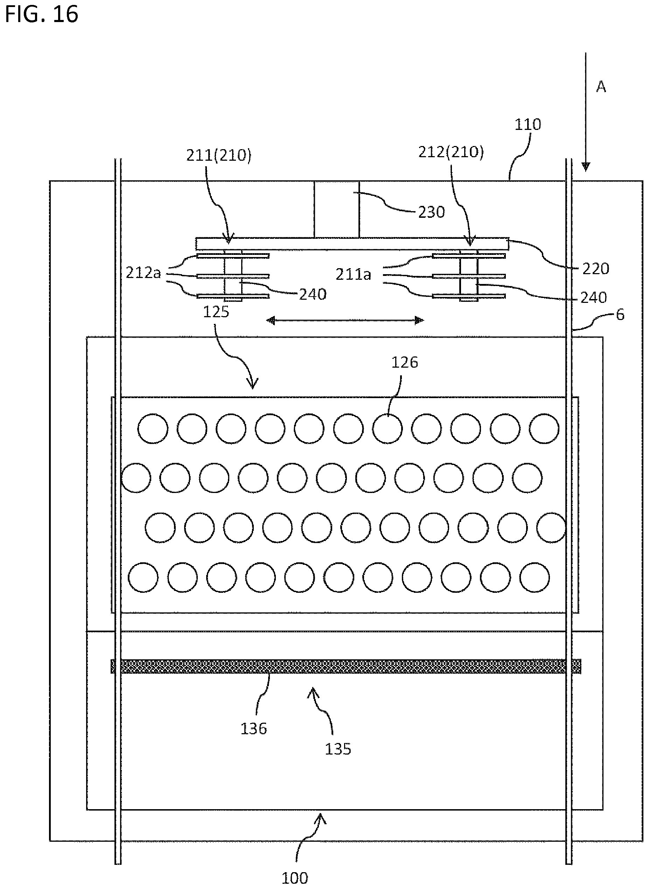

The position where the extension part 210 is provided is not limited to such an aspect, and the moving main body 220 may be provided at four or more positions of the moving main body 220 in the horizontal direction. In the present embodiment, an aspect in which the extension part 210 reciprocates in the horizontal direction along the conveyance direction A of the substrate 200 will be described, but the present invention is not limited to such an aspect, and for example, an aspect in which the extension part 210 reciprocates in the horizontal direction along a direction orthogonal to the conveyance direction A of the substrate 200 may be adopted (see Figs. 15 and 16). However, in this case, since the extension part 210 is provided on a lower side of the substrate 200, there is a possibility of contact with the substrate 200. From this viewpoint, it is preferable to adopt an aspect in which the extension part 210 reciprocates in the horizontal direction at a position not overlapping a conveyance region of the substrate 200 in plan view.

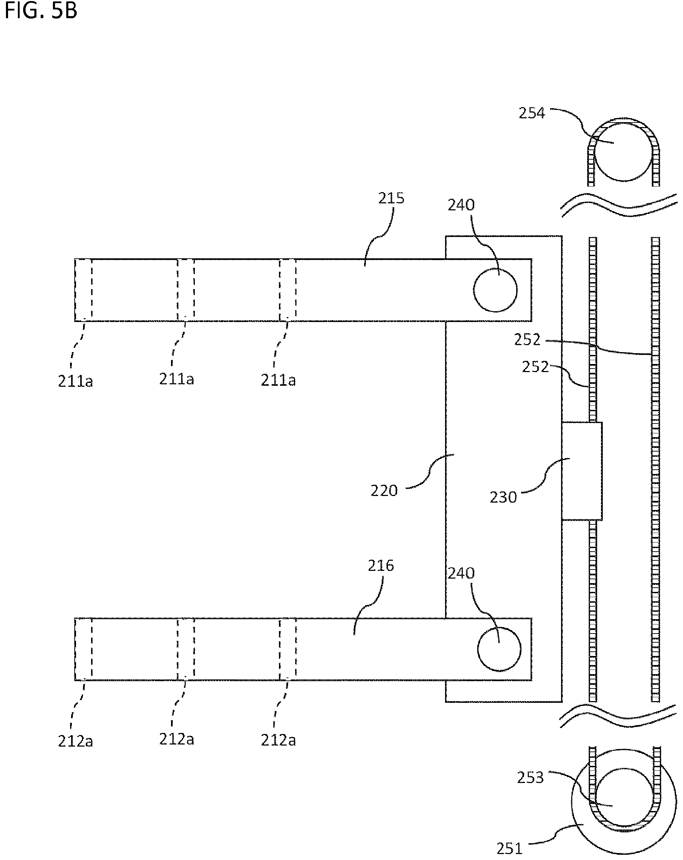

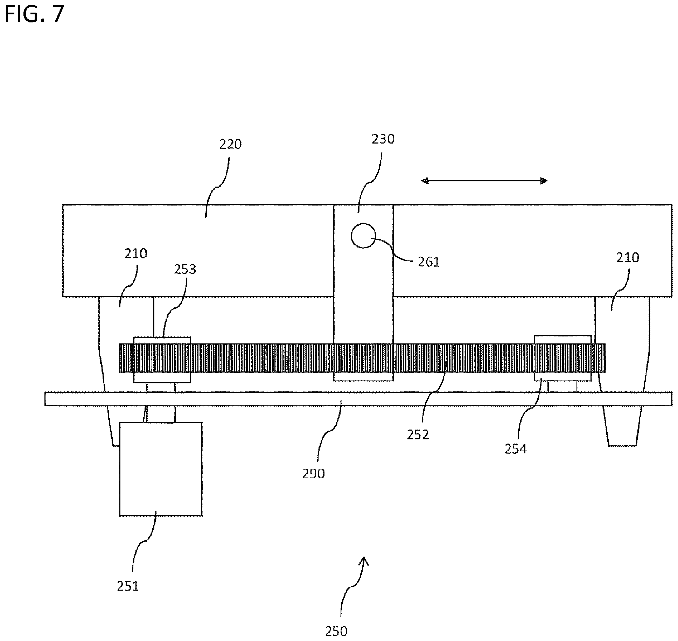

As illustrated in Fig. 7, the moving unit 250 may have a drive motor 251 and a drive belt 252 moved in the horizontal direction by the drive motor 251. The drive motor 251 is provided with a drive gear 253, and the drive gear 253 is connected to a driven-side drive gear 254 via the drive belt 252 (see also Fig. 5B). The coupling body 230 extending in the vertical direction is coupled to the drive belt 252, and the coupling body 230 is fixed to the moving main body 220 via a fastening member 261 such as a screw. As the drive motor 251 rotates, the drive belt 252 rotates, and as a result, the coupling body 230 is moved in the horizontal direction, and the moving main body 220 coupled to the coupling body 230 is moved in the horizontal direction. Note that another aspect can be adopted as the moving unit 250, and for example, an aspect (for example, a hydraulic cylinder) in which the coupling body 230 is moved in the horizontal direction by a cylinder can also be used (see Figs. 3 and 4). In the aspect illustrated in Figs. 3 and 4, the moving unit 250 including the hydraulic cylinder extends and contracts the cylinder, so that the coupling body 230 is moved in the horizontal direction. Furthermore, a uniaxial slider robot may be used as the moving unit 250.

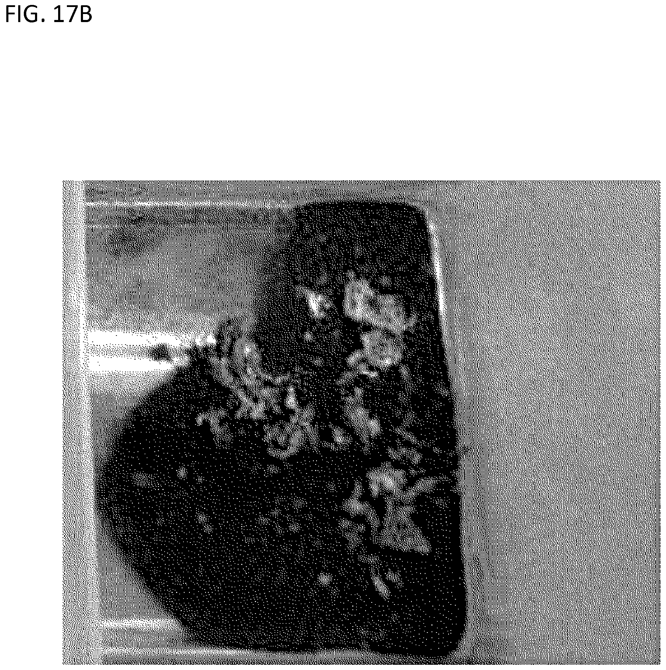

The horizontal movement of the extension part 210 for separating dross may be performed while soldering the substrate 200, or may be performed while soldering to the substrate 200 is not performed. The horizontal movement of the extension part 210 for separating the dross may take about 2 to 5 minutes at a time or may be constantly performed. Moving the extension part 210 in the horizontal direction also leads to suppression of dross from clumping. In a case where it is desired to promote separation of dross, a reciprocation speed in the horizontal direction may be increased. The dross not formed into a lump but separated (see Fig. 17B) may be manually removed by an operator or may be automatically collected by providing a screw and an accumulation box as illustrated in Patent Literature 2.

The first extension part 211 may include a plurality of first extension members 211a. The first extension members 211a may be provided in parallel along a normal direction of the moving direction of the coupling body 230 (see Figs. 3 and 4). The second extension part 212 may also include a plurality of second extension members 212a. The second extension members 212a may be provided in parallel along the normal direction of the moving direction, and the intervals between the extension members 211a and 212a may be substantially the same. In the present application, "the intervals are substantially the same" means that an interval is within 10% with respect to a largest interval A, and means that an interval of each of the extension members 211a and 212a is 0.9A or more and 1.1A or less. The interval between the extension members 211a and 212a is, for example, about 10 to 30 mm. Although three each of extension members 211a and 212a are illustrated in Figs. 3 and 4, the present invention is not limited to such an aspect, and two or four or more of respective extension members 211a and 212a may be provided. Each of the extension members 211a and 212a may be formed of a blade, a spatula, a paddle, or the like, and a thickness thereof may be about 0.1 to 0.3 mm. Note that the interval between the extension members 211a and 212a may be reduced in a case where the speed of reciprocation is low, and the interval between the extension members 211a and 212a may be increased in a case where the speed of reciprocation is high. As the first extension member 211a and the second extension member 212a, the same member and shape may be adopted, or different members and shapes may be adopted. Note that in a case where only one extension member is provided, the extension member and the extension part have the same meaning. Therefore, in a case where only one first extension member 211a is provided, the first extension member 211a and the first extension part 211 mean the same member, and similarly, in a case where only one second extension member 212a is provided, the second extension member 212a and the second extension part 212 mean the same member.

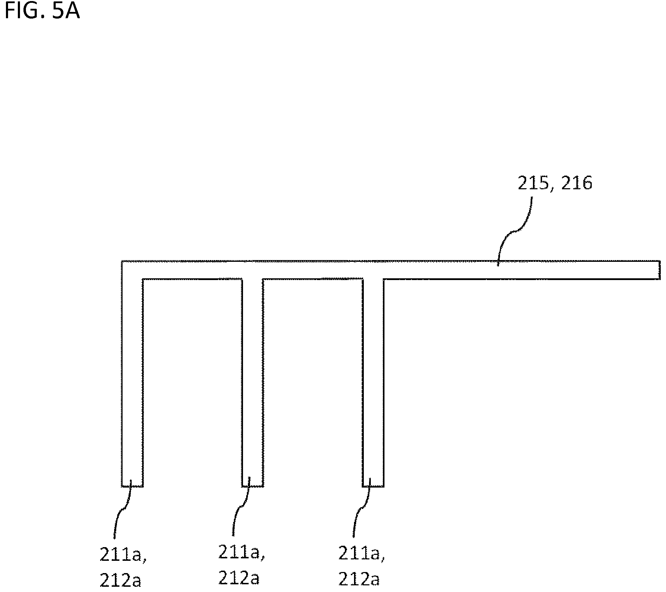

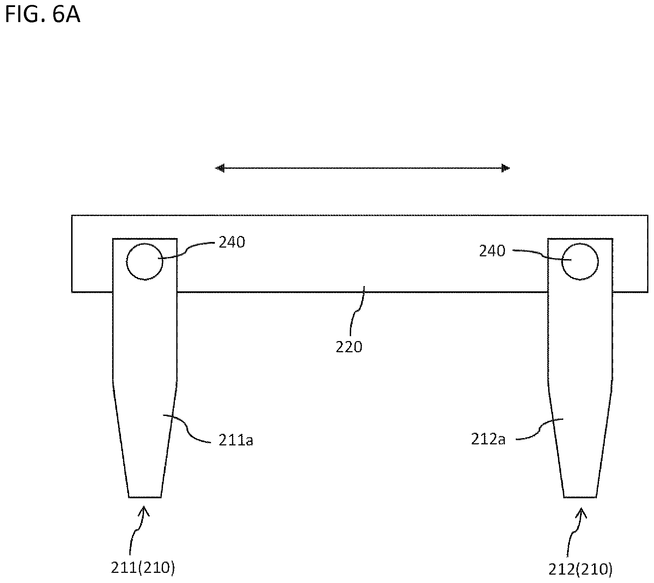

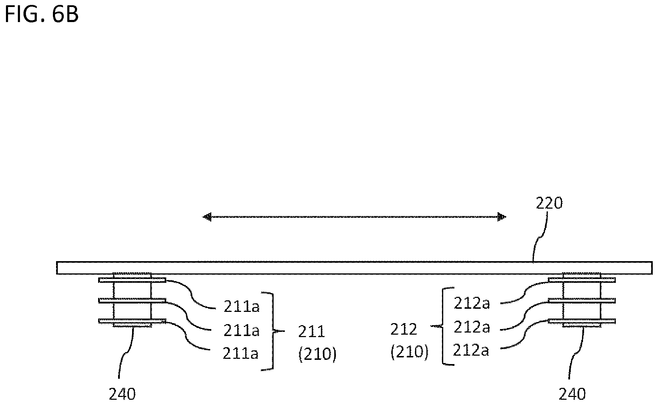

Each of the first extension member 211a and the second extension member 212a may be connected to the moving main body 220 via a fastening member 240 such as a screw (see Figs. 2, 4, 6A, and 6B). Furthermore, each of the first extension members 211a may be configured integrally with a first coupling body 215 extending in the horizontal direction, and the first coupling body 215 may be coupled to the moving main body 220 via the fastening member 240 such as a screw (see Figs. 5A, 5B, and 3). Similarly, each of the second extension members 212a may be configured integrally with a second coupling body 216 extending in the horizontal direction, and the second coupling body 216 may be coupled to the moving main body 220 via the fastening member 240 such as a screw. In Fig. 5A, the first extension member 211a and the first coupling body 215, and the second extension member 212a and the second coupling body 216 are collectively illustrated, but reference sign 215 is used when reference sign 211a is used, and reference sign 216 is used when reference sign 212a is used.

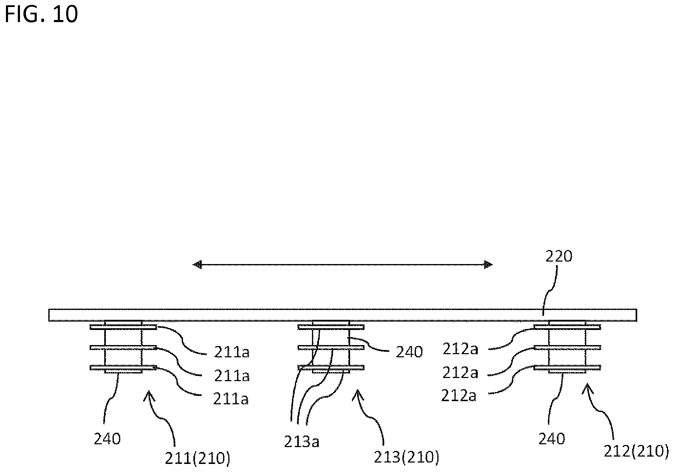

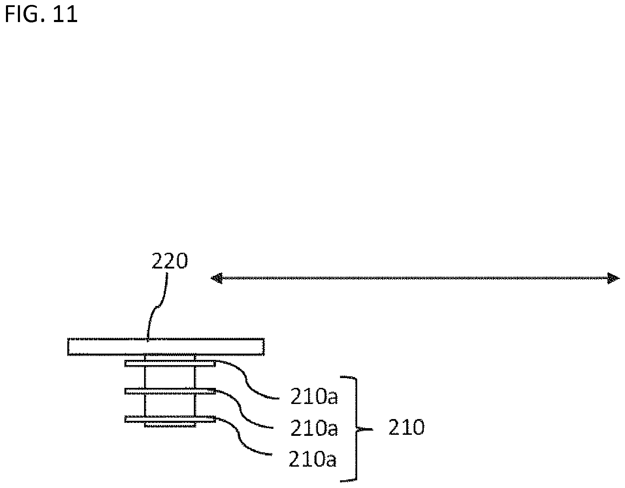

Furthermore, the same applies to a case where the extension part 210 is provided only at one place of the moving main body 220 or a case where the third extension part 213 is provided. In a case where the extension part 210 is provided only at one position of the moving main body 220, the extension part 210 may include a plurality of extension members 210a, the extension members 210a may be provided in parallel along the normal direction of the moving direction, and the intervals of the extension members 210a may be substantially the same (see Fig. 11). In a case where the third extension part 213 is provided, the third extension part 213 may include a plurality of third extension members, the third extension members may be provided in parallel along the normal direction in the moving direction, and the intervals between the third extension members 213a may be substantially the same (see Fig. 10). In addition to the third extension part 213, two or more extension parts such as a fourth extension part and a fifth extension part may be provided between the first extension part 211 and the second extension part 212.

The moving unit 250 may move the end of the extension part 210 to a distance of 5 cm or less from an inner wall of the storage tank 110. In a case where the first extension part 211 and the second extension part 212 are provided, the end (an upper end in Figs. 3 and 4) of the first extension part 211 may be moved, and the end (a lower end in Figs. 3 and 4) of the second extension part 212 may be moved to a distance of 5 cm or less from the inner wall on the other side of the storage tank 110 (see an arrow D in Figs. 3 and 4). By adopting such an aspect, the extension part 210 can be moved to the vicinity of both ends of the storage tank 110. Furthermore, the molten solder S created by the movement of the second extension part 212 in the molten solder S can be cut by the first extension part 211, and similarly, the molten solder S created by the movement of the first extension part 211 in the molten solder S can be cut by the second extension part 212. Therefore, it is possible to more effectively suppress the dross from clumping.

The extension part 210 may be immersed in the molten solder S in a length of 3 cm or more, preferably 5 cm or more, more preferably 10 cm or more. In a case where the plurality of extension members 210a, 211a, 212a, and 213a are provided, each of the extension members 210a, 211a, 212a, and 213a may be immersed in the molten solder S with a length of 3 cm or more, a length of 5 cm or more, or a length of 10 cm or more.

The extension part 210 may be made of a thermally conductive material. As an example, the extension part 210 may be made of stainless steel, steel, cast iron, a titanium alloy, a magnesium alloy, or the like. It is beneficial that the thermal conductivity of the extension part 210 is 10 W/m · K or more, it is more beneficial that the thermal conductivity is 13 W/m · K or more, and it is still more beneficial that the thermal conductivity is 15 W/m · K or more. Since the extension part 210 is made of a material having high thermal conductivity as described above, the heat of the molten solder S can be given to the extension part 210. Since the specific gravity of the oxidized waste (dross) is light, the oxidized waste floats on the upper surface of the molten solder S. However, by adopting a material having high thermal conductivity as the extension part 210, the dross can be effectively decomposed by applying heat to the dross located on the upper surface side of the molten solder S. In a case where the plurality of extension members 210a, 211a, 212a, and 213a are provided, each of the extension members 210a, 211a, 212a, and 213a may be made of a thermally conductive material.

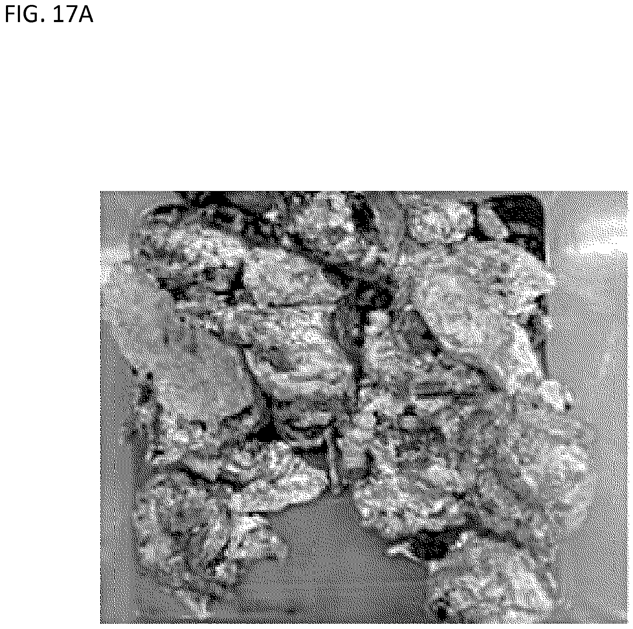

In particular, in the case of using Sn-58Bi (Bi58Sn42) as the solder, the generation of the oxide waste is considerably increased as compared with the case of using SAC305 (Sn96.5Ag3.0Cu0.5). Therefore, adopting the extension part 210 as in the present embodiment is particularly advantageous when Sn-58Bi is used. Fig. 17A is a photograph of a result of not adopting the extension part 210 as in the present aspect in the case of using Sn-58Bi. It can be confirmed that a large lump is formed, the color of the lump is silver, and the lump is formed in a state of containing a large amount of solder components. Fig. 17B illustrates a result in a case where the extension part 210 of the aspect as illustrated in Fig. 4 is adopted, the dross can be decomposed, the dross is not formed into a lump as illustrated in Fig. 17A, and the color is also black. Therefore, it can be confirmed that the separated dross obtained in the case where the extension part 210 of the aspect as illustrated in Fig. 4 is adopted does not contain a solder component or contains a solder component only in a small amount.

Note that, in order to promote separation of dross, saccharides such as rice bran, bran, wheat bran, beans, sesame, sunflower, coconut, rapeseed, vegetable oil, wood flour, and the like, and pine resin, ammonium chloride, a halide of amine, and the like may be provided to the molten solder S as an oxidation separator.

Next, an example of a processing method of a substrate 200 will be described mainly with reference to Fig. 1.

When an operator places the substrate 200 on the conveyance rail 6, the conveyance unit 5 conveys the substrate 200, and the substrate 200 is conveyed into the main body 1 from the carry-in port 2. When the substrate 200 reaches the fluxer 10, the fluxer 10 applies flux to a predetermined part of the substrate 200.

The conveyance unit 5 conveys the substrate 200 coated with the flux by the fluxer 10 to the preheater unit 15. The preheater unit 15 heats the substrate 200 to a predetermined temperature.

Next, the conveyance unit 5 conveys the substrate 200 heated to the predetermined temperature by the preheater unit 15 to the jet soldering apparatus 100. The jet soldering apparatus 100 solders a predetermined part of the substrate 200. While the jet soldering apparatus 100 is supplying the molten solder S, the molten solder S supplied from the first supply port 125 and the molten solder S supplied from the second supply port 135 are mixed, and the molten solder S is supplied to above the conveyance rail 6. The molten solder S is configured not to be separated from the substrate 200 conveyed by the conveyance unit 5 between the first supply port 125 and the second supply port 135. By adopting such an aspect, it has been confirmed that oxidation of the molten solder S (generation of oxidized waste) can be prevented. By suppressing the oxidation of the molten solder S in this manner, the amount of solder that cannot be used is suppressed, so that the material cost can be reduced. Note that by adopting this aspect and in a state where the substrate 200 does not exist, the molten solder S supplied from the first supply port 125 pushes up the molten solder S supplied from the second supply port 135, and a plurality of convex shapes corresponding to the first openings 126 are formed by the molten solder S.

As described above, the present invention is not limited to such an aspect, and an aspect may be adopted in which the molten solder S supplied from the first supply port 125 and the molten solder S supplied from the second supply port 135 are separated from each other, and the molten solder S is separated from the substrate 200 conveyed by the conveyance unit 5 between the first supply port 125 and the second supply port 135.

In such a jet soldering apparatus 100, a unit (assembly) including the extension part 210, the moving main body 220, the coupling body 230, and the moving unit 250 is installed, and the extension part 210 reciprocates in the horizontal direction in the molten solder S, whereby the dross is separated.

Next, the conveyance unit 5 conveys the soldered substrate 200 to the cooler 20. For example, a cooling fan of the cooler 20 cools the soldered substrate 200 for a predetermined time. After the substrate 200 is cooled, when the conveyance unit 5 discharges the substrate 200 from the carry-out port 3, the soldering processing to the substrate 200 is completed.

### <<Effects>>

Next, effects of the present embodiment having the above-described configuration, which have not yet been described, will be mainly described. Even if it is not described in the "Configuration", any configuration described in "Effects" can be adopted in the present invention.

In a case where the aspect of reciprocating the extension part 210 in the horizontal direction in the molten solder S is adopted, it is possible to prevent dross from forming a lump (see Fig. 17B). When the dross is not decomposed and becomes a lump, as illustrated in Fig. 17A, the dross becomes a lump containing a solder component. Although the solder component can be originally used for bonding the electronic component to the substrate 200, if the solder component becomes such a lump, it is difficult to reuse the solder component (separation of the solder requires considerable labor and considerable cost.). When the amount of solder that cannot be used increases in this manner, the material cost increases. On the other hand, by adopting this aspect, it is possible to prevent such a situation from occurring (see Fig. 17B), and thus, it is possible to prevent the material cost from increasing. In particular, the inventors have confirmed that dross tends to form lumps in a material containing Bi, and this aspect is particularly beneficial in a material containing Bi.

Note that, when the aspect in which the blades are installed as described in Patent Literature 1 or the aspect in which the screws are installed as described in Patent Literature 2 is adopted, it can be confirmed that the dross floating on the molten solder S is only stirred by the blades or the screws, and the dross cannot be sufficiently prevented from forming lumps. On the other hand, in the present aspect, it is possible to remarkably suppress lump formation of dross. It is presumed that the reason why the present aspect can show such a remarkably excellent result is that the extension part 210 reciprocates in the horizontal direction to cause a flow in the molten solder S, the extension part 210 can cut a lump of dross when the extension part 210 moves in the direction opposite to the flow, and the extension part 210 reciprocates in the horizontal direction to increase the contact probability with the dross. In addition, according to the aspect in which the blades are installed as shown in Patent Literature 1 and the screws shown in Patent Literature 2, it is also presumed that the separation of the dross does not effectively proceed as in the present embodiment due to the blocking of the flow of the molten solder S.

Since the separation of dross can be efficiently and automatically performed by adopting the present embodiment, it is also possible to operate the jet soldering apparatus 100 for 24 hours, which is extremely advantageous in that the productivity of the jet soldering apparatus 100 can be improved. In a case where the aspect of reciprocating the extension part 210 as in the present embodiment is not adopted in the jet soldering apparatus 100, dross becomes a lump. Therefore, it is necessary to stop the jet soldering apparatus 100 and remove the lump of dross (for example, it is necessary to stop the operation of the jet soldering apparatus 100 every 8 hours and then clean the jet soldering apparatus 100 for 1 hour or more). However, according to the present embodiment, since the dross is automatically separated, it is possible to perform the work of removing the separated dross without stopping the operation of the jet soldering apparatus 100. As described above, in a case where a component that is easily oxidized such as Bi is used, there is a strong tendency for dross to form a lump.

In the case of adopting the aspect in which the first extension part 211 provided on one side in the horizontal direction and the second extension part 212 provided on the other side in the horizontal direction are provided, it has been confirmed that the first extension part 211 cuts the wave of the molten solder S formed by the second extension part 212, and similarly, the second extension part 212 cuts the wave of the molten solder S formed by the first extension part 211, and further, the dross is less likely to form a lump. Therefore, it is also very beneficial to adopt this aspect.

In a case where the plurality of extension members 210a is provided in parallel, it can be confirmed that the molten solder S can be cut by the plurality of extension members 210a, and further the dross is less likely to form a lump. Therefore, in the aspect in which the first extension part 211 and the second extension part 212 are provided, when adopting the aspect in which the first extension part 211 includes the plurality of first extension members 211a and the second extension part 212 includes the plurality of second extension members 212a, dross is less likely to be lumped, which is a more beneficial aspect.

By moving the extension part 210 to the vicinity of the end of the storage tank 110, the molten solder S in the storage tank 110 can be evenly cut, and dross can be prevented from forming a lump in the entire storage tank 110. From this viewpoint, the moving unit 250 may move the end of the extension part 210 to a distance of 5 cm or less, preferably 2 cm or less, more preferably 1 cm or less from the inner wall of the storage tank 110. In the aspect in which the first extension part 211 and the second extension part 212 are provided, it is advantageous to adopt an aspect in which the moving unit 250 moves the first extension part 211 to a distance of 5 cm or less, 2 cm or less, or 1 cm or less from the inner wall on one side of the storage tank 110, and moves the second extension part 212 to a distance of 5 cm or less, 2 cm or less, or 1 cm or less from the inner wall on the other side of the storage tank 110 (see arrows D in Figs. 3 and 4).

As a result of examination by the inventors, it is considered that the extension part 210 becomes high heat by immersing the extension part 210 in the molten solder S, and this heat is transferred to the molten solder S for one reason, so that it is difficult to form a dross lump. Therefore, it is beneficial that the extension part 210 is immersed in the molten solder S at a certain depth. From this viewpoint, it is advantageous to adopt an aspect in which the extension part 210 is immersed in the molten solder S with a length of 3 cm or more, preferably 5 cm or more, more preferably 10 cm or more. In a case where the plurality of extension members 210a are provided, it is advantageous to adopt an aspect in which each of the extension members 210a is immersed in the molten solder S with a length of 3 cm or more, preferably 5 cm or more, and more preferably 10 cm or more.

Furthermore, in view of the effect of heat transfer as described above, it is advantageous that the extension part 210 is made of a material having high thermal conductivity (thermally conductive material). This is because, in a case where the extension part 210 is made of a thermally conductive material, the extension part 210 can have heat of the molten solder S over the entire extension part, and formation of dross lumps can be prevented.

### REFERENCE SIGNS LIST

- 110: storage tank
- 210: extension part
- 211: first extension part
- 211a: first extension member
- 212: second extension part
- 212a: second extension member
- 220: moving main body
- 250: moving unit
- S: molten solder

## Claims

1. A solder processing apparatus comprising:
a storage tank (110) storing molten solder (S); and
a moving main body (220); and **characterised by** further comprising:
an extension part (210) being at least partially immersed in the molten solder (S) stored in the storage tank (110),
the solder processing apparatus being **characterised by**:
the extension part (210) having a first extension part (211) provided at one end of the moving main body (220) in a moving direction and extending along the moving direction, and a second extension part (212) provided at the other end of the moving main body (220) in the moving direction and extending along the moving direction; and by:
a moving unit (250) coupled to the moving main body (220) and configured to reciprocate the first extension part (211) and the second extension part (212) in a horizontal direction in the molten solder (S).

2. The solder processing apparatus according to claim 1,
wherein the moving unit (250) is configured to move the first extension part (211) to a distance of 5 cm or less from an inner wall on one side of the storage tank (110) and the second extension part (212) to a distance of 5 cm or less from the inner wall on the other side of the storage tank (110).

3. The solder processing apparatus according to claim 1 or 2,
wherein the extension part (210) includes a plurality of extension members (210a),
wherein the plurality of extension members (210a) are provided in parallel along a normal direction of a reciprocal movement, and an interval between the extension members (210a) is 30 mm or less.

4. The solder processing apparatus according to any one of claims 1 to 3,
wherein the first extension part (211) and the second extension part (212) are immersed in the molten solder (S) in a length of 3 cm or more.

5. The solder processing apparatus according to any one of claims 1 to 4,
wherein an extending direction of the first extension part (211) and an extending direction of the second extension part (212) are in parallel to the moving direction.

6. The solder processing apparatus according to any one of claims 1 to 5,
wherein a first supply port (125) and a second supply (135) port configured to provide the molten solder (S) are provided, and
wherein a first housing (121) on which the first supply port is provided and a second housing (131) on which the second supply port (135) is provided are integrated, and a place where the molten solder (S) falls is not provided between the first supply port (125) and the second supply port (135) along a substrate conveyance direction.

7. The solder processing apparatus according to claim 6,
comprising a conveyance rail (6) for conveying a substrate,
and wherein in use, an upper surface of the molten solder (S; supplied from the first supply port (125) and the second supply port (135) and mixed is not positioned below a lower end of the conveyance rail (6), in an entire length region along the substrate conveyance direction between the first supply port (125) and the second supply port (135).

## Patentansprüche

1. Lötverarbeitungseinrichtung, umfassend:
einen Speicherbehälter (110), der geschmolzenes Lot (S) speichert; und
einen beweglichen Hauptkörper (220); und **dadurch gekennzeichnet, dass** sie weiter Folgendes umfasst:
ein Verlängerungsteil (210), das zumindest teilweise in das in dem Speicherbehälter (110) gespeicherte geschmolzene Lot (S) eingetaucht ist,
wobei die Lötverarbeitungseinrichtung **dadurch gekennzeichnet ist, dass**:
der Verlängerungsteil (210) einen ersten Verlängerungsteil (211) aufweist, der an einem Ende des sich bewegenden Hauptkörpers (220) in einer Bewegungsrichtung bereitgestellt ist und sich entlang der Bewegungsrichtung erstreckt, und einen zweiten Verlängerungsteil (212), der am anderen Ende des sich bewegenden Hauptkörpers (220) in der Bewegungsrichtung bereitgestellt ist und sich entlang der Bewegungsrichtung erstreckt; und dadurch, dass:
eine Bewegungseinheit (250), die mit dem beweglichen Hauptkörper (220) gekoppelt ist und so konfiguriert ist, dass sie den ersten Verlängerungsteil (211) und den zweiten Verlängerungsteil (212) in einer horizontalen Richtung in dem geschmolzenen Lot (S) hin- und herbewegt.

2. Lötverarbeitungseinrichtung nach Anspruch 1,
wobei die Bewegungseinheit (250) so konfiguriert ist, dass sie den ersten Verlängerungsteil (211) um einen Abstand von 5 cm oder weniger von einer inneren Wand auf einer Seite des Speicherbehälters (110) und den zweiten Verlängerungsteil (212) um einen Abstand von 5 cm oder weniger von der inneren Wand auf der anderen Seite des Speicherbehälters (110) bewegt.

3. Lötverarbeitungseinrichtung nach Anspruch 1 oder 2,
wobei der Verlängerungsteil (210) eine Vielzahl von Verlängerungselementen (210a) einschließt,
wobei die Vielzahl von Verlängerungselementen (210a) parallel entlang einer Normalenrichtung einer Hin- und Herbewegung angeordnet sind und ein Abstand zwischen den Verlängerungselementen (210a) 30 mm oder weniger beträgt.

4. Lötverarbeitungseinrichtung nach einem der Ansprüche 1 bis 3,
wobei der erste Verlängerungsteil (211) und der zweite Verlängerungsteil (212) in einer Länge von 3 cm oder mehr in das geschmolzene Lot (S) eingetaucht sind.

5. Lötverarbeitungseinrichtung nach einem der Ansprüche 1 bis 4,
wobei eine Erstreckungsrichtung des ersten Verlängerungsteils (211) und eine Erstreckungsrichtung des zweiten Verlängerungsteils (212) parallel zur Bewegungsrichtung verlaufen.

6. Lötverarbeitungseinrichtung nach einem der Ansprüche 1 bis 5,
wobei eine erste Zufuhröffnung (125) und eine zweite Zufuhröffnung (135), die konfiguriert sind, um das geschmolzene Lot (S) zuzuführen, bereitgestellt sind, und
wobei ein erstes Gehäuse (121), an dem die erste Zufuhröffnung bereitgestellt ist, und ein zweites Gehäuse (131), an dem die zweite Zufuhröffnung (135) bereitgestellt ist, integriert sind, und ein Ort, an dem das geschmolzene Lot (S) fällt, zwischen der ersten Zufuhröffnung (125) und der zweiten Zufuhröffnung (135) nicht entlang einer Substrattransportrichtung bereitgestellt ist.

7. Lötverarbeitungseinrichtung nach Anspruch 6,
umfassend eine Förderschiene (6) zum Fördern eines Substrats, und wobei im Gebrauch eine obere Oberfläche des geschmolzenen Lots (S), das aus der ersten Zufuhröffnung (125) und der zweiten Zufuhröffnung (135) zugeführt und gemischt wird, nicht unterhalb eines unteren Endes der Förderschiene (6) in einem gesamten Längenbereich entlang der Substratförderrichtung zwischen der ersten Zufuhröffnung (125) und der zweiten Zufuhröffnung (135) positioniert ist.

## Revendications

1. Appareil de traitement de brasure comprenant :
un réservoir de stockage (110) stockant une brasure fondue (S) ; et
un corps principal en déplacement (220) ; et **caractérisé en ce qu'**il comprend en outre :
une partie d'extension (210) qui est au moins partiellement immergée dans la brasure fondue (S) stockée dans le réservoir de stockage (110),
l'appareil de traitement de brasure étant **caractérisé par** :
la partie d'extension (210) présentant une première partie d'extension (211) prévue à une extrémité du corps principal en déplacement (220) dans une direction de déplacement et s'étendant le long de la direction de déplacement, et une seconde partie d'extension (212) prévue à l'autre extrémité du corps principal en déplacement (220) dans la direction de déplacement et s'étendant le long de la direction de déplacement ; et
une unité de déplacement (250) couplée au corps principal en déplacement (220) et configurée pour faire effectuer un mouvement de va-et-vient de la première partie d'extension (211) et de la seconde partie d'extension (212) dans une direction horizontale dans la brasure fondue (S).

2. Appareil de traitement de brasure selon la revendication 1,
dans lequel l'unité de déplacement (250) est configurée pour déplacer la première partie d'extension (211) à une distance inférieure ou égale à 5 cm par rapport à une paroi intérieure d'un côté du réservoir de stockage (110) et la seconde partie d'extension (212) à une distance inférieure ou égale à 5 cm par rapport à la paroi intérieure de l'autre côté du réservoir de stockage (110).

3. Appareil de traitement de brasure selon la revendication 1 ou la revendication 2,
dans lequel la partie d'extension (210) inclut une pluralité d'éléments d'extension (210a),
dans lequel la pluralité d'éléments d'extension (210a) sont prévus en parallèle le long d'une direction normale d'un mouvement en va-et-vient, et un intervalle entre les éléments d'extension (210a) est inférieur ou égal à 30 mm.

4. Appareil de traitement de brasure selon l'une quelconque des revendications 1 à 3,
dans lequel la première partie d'extension (211) et la seconde partie d'extension (212) sont immergées dans la brasure fondue (S) à une longueur supérieure ou égale à 3 cm.

5. Appareil de traitement de brasure selon l'une quelconque des revendications 1 à 4,
dans lequel une direction d'extension de la première partie d'extension (211) et une direction d'extension de la seconde partie d'extension (212) sont parallèles à la direction de déplacement.

6. Appareil de traitement de brasure selon l'une quelconque des revendications 1 à 5,
dans lequel un premier port d'alimentation (125) et un second port d'alimentation (135) configurés pour fournir la brasure fondue (S) sont prévus, et
dans lequel un premier boîtier (121) sur lequel le premier port d'alimentation est prévu et un second boîtier (131) sur lequel le second port d'alimentation (135) est prévu sont intégrés, et un endroit où tombe la brasure fondue (S) n'est pas prévu entre le premier port d'alimentation (125) et le second port d'alimentation (135) le long d'une direction de transport de substrat.

7. Appareil de traitement de brasure selon la revendication 6,
comprenant un rail de transport (6) destiné à transporter un substrat, et dans lequel, en utilisation,
une surface supérieure de la brasure fondue (S) alimentée par le premier port d'alimentation (125) et le second port d'alimentation (135) et mélangée n'est pas positionnée au-dessous d'une extrémité inférieure du rail de transport (6) dans toute une région en longueur le long de la direction de transport de substrat entre le premier port d'alimentation (125) et le second port d'alimentation (135).
